# EUROPEAN PATENT APPLICATION

(11) **EP 4 386 797 A1**
(43) Date of publication of application: **19.06.2024**
(21) Application number: 22876449.4
(22) Date of filing: 29.09.2022
(51) Int. Cl.: H01G 9/07, H01G 9/00, H01G 9/028, H01G 9/055, H01G 9/145, H01G 9/15

(54) **SOLID ELECTROLYTE CAPACITOR AND METHOD FOR MANUFACTURING SAME**

(30) Priority: 30.09.2021 JP 2021161146
(71) Applicant: Nippon Chemi-Con Corporation, Tokyo 141-8605 (JP)
(72) Inventor: TANAKA, Atsushi, Tokyo 141-8605 (JP); WAKABAYASHI, Toshiki, Tokyo 141-8605 (JP); GOUTSU, Tomoyuki, Tokyo 141-8605 (JP); YOSHIOKA, Kyohei, Tokyo 141-8605 (JP); MACHIDA, Kenji, Tokyo 141-8605 (JP); KAMIYAMA, Nozomu, Tokyo 141-8605 (JP); KOSEKI, Kazuya, Tokyo 141-8605 (JP); NAGAHARA, Kazuhiro, Tokyo 141-8605 (JP); SATO, Kenta, Tokyo 141-8605 (JP)
(74) Representative: Kramer Barske Schmidtchen Patentanwälte PartG mbB
(86) International application number: PCT/JP2022/036439
(87) International publication number: WO 2023/054585

(57) **Abstract**

A solid electrolytic capacitor that exhibits both high withstand voltage and large capacity and a manufacturing method of the solid electrolytic capacitor are provided. The solid electrolytic capacitor includes anode foil, cathode foil facing the anode foil, and conductive polymers intervening between the anode foil and the cathode foil. The anode foil has tunnel-shaped etching pits formed on a surface layer of the anode foil, a dielectric oxide film layer formed on the surface layer of the anode foil, and a pseudo boehmite layer on the dielectric oxide film layer and formed on the surface layer of the anode foil. An amount of the pseudo boehmite layer is adjusted to be 0.4 mg · cm⁻² to 1.8 mg · cm⁻².

## Description

### FIELD OF INVENTION

The present disclosure relates to a solid electrolytic capacitor and a manufacturing method thereof.

### BACKGROUND

Electrolytic capacitors include valve action metal, such as tantalum or aluminum, as anode foil and cathode foil. A surface of the anode foil is enlarged by making the valve action metal into a sintered body or a shape such as etching foil, and the enlarged surface has a dielectric oxide film thereon by treatment such as anode oxidation. An electrolyte intervenes between the anode foil and the cathode foil.

The specific surface area of this electrolytic capacitor can be enlarged by enlarging the surface of the anode foil, which is advantageous to achieve the capacitance larger than other types of capacitors. Furthermore, the electrolytic capacitor includes the electrolyte in a state of electrolytic solution. An area of the dielectric oxide film of the anode foil that contacts with the electrolytic solution increases. Therefore, the capacitance of the electrolytic capacitor can be further increased easily. However, the electrolytic solution evaporates and volatilize outside over time, and the capacitance of the electrolytic capacitor decreases, the electrostatic tangent of the electrolytic capacitor increases, and the electrolytic capacitor dries up.

Accordingly, solid electrolytic capacitor using solid electrolytes are getting attention among the electrolytic capacitors. Manganese dioxide and 7,7,8,8-tetracyanoquinodimethane (TCNQ) complex are known as solid electrolytes. In recent years, conductive polymers derived from monomers with n-conjugated double bonds, such as poly(3,4-ethylenedioxythiophene) (PEDOT) having excellent adhesion characteristic to the dielectric oxide film, are rapidly becoming popular as solid electrolytes. In the conductive polymer, acid compounds such as polyanions are used as dopants, and the conductive polymer has a partial structure acting as the dopant in monomer molecules, exhibiting high conductivity. Therefore, the solid electrolytic capacitor is advantageous in that equivalent series resistance (ESR) becomes low.

### PRIOR ART DOCUMENT

### PATENT DOCUMENT

Patent Document 1: JP2008-109068A

### SUMMARY OF INVENTION

### PROBLEMS TO BE SOLVED BY INVENTION

The capacitors are used in various application. For example, in the field of power electronics, a power supply circuit which converts AC power into DC power by a converter circuit and converts said DC power into desired AC power by an inverter circuit is provided with a smoothing capacitor to suppress pulsation of DC output from the converter circuit, smooth the suppressed the DC, and then input the DC to the inverter circuit. Furthermore, for the stable operation and noise removal of a semi-conductor switching element such as gallium nitride, a decoupling capacitor is provided near said semi-conductor switching element.

Along with the recent trend of higher power demand, there is a strong demand for a capacitor with large capacity. The solid electrolytic capacitor can easily meet this higher power demand, because it can increase the capacity easier than the film capacitor. However, the recent higher power demand also demands a capacitor with higher withstand voltage. For example, in the field of power electronics, a capacitor with high withstand voltage of at least more than 250 V.

A capacitor using electrolytic solution has high withstand voltage due to the defect repairing effect for dielectric oxide film by the electrolytic solution, whereas the solid electrolytic capacitor has difficulty in satisfying high withstand voltage in comparison with the electrolytic capacitor using electrolytic solution from the viewpoint of the adhesion to the anode foil and the defect repairing effect for dielectric oxide film.

Generally, the dielectric oxide film may be thickened to increase the withstand voltage of the solid electrolytic capacitor. However, when the dielectric oxide film is thick, the capacitance, which is an advantage of the solid electrolytic capacitor, decreases. That is, it is difficult to achieve the solid electrolytic capacitor with both high withstand voltage and large capacity, which copes with the recent high-power demand.

The present disclosure is proposed to address the above-described problem, and the objective is to provide a solid electrolytic capacitor that exhibits both high withstand voltage and large capacity and a manufacturing method of the solid electrolytic capacitor.

### MEANS TO SOLVE THE PROBLEM

To address the above-described problem, the solid electrolytic capacitor of the present disclosure includes:
anode foil;
a cathode body facing the anode foil; and
a conductive polymer layer intervening between the anode foil and the cathode body,
in which:
   the anode foil has tunnel-shaped etching pits formed on a surface layer of the anode foil, a dielectric oxide film layer formed on the surface layer of the anode foil, and a pseudo boehmite layer on the dielectric oxide film layer and formed on the surface layer of the anode foil, and
   an amount of the pseudo boehmite layer is 0.4 mg· cm⁻² to 1.8 mg · cm⁻².

The solid electrolytic capacitor may further include electrolytic solution between of the anode foil and the cathode body.

The conductive polymer layer may be formed by conductive polymer solution including the conductive polymer.

The conductive polymer layer may include the conductive polymer, a solvent of the conductive polymer solution that disperses or dissolves the conductive polymer, and an additive to which the conductive polymer is added.

The solid electrolytic capacitor may include a capacitor element having the anode foil, the cathode body, and the conductive polymer layer, and a weight of the conductive polymer layer may be 30 mg · cm⁻³ to 250 mg · cm⁻³ per unit volume of the capacitor element.

The solid electrolytic capacitor may include a capacitor element having the anode foil, the cathode body, and the conductive polymer layer, and a weight of the conductive polymer layer may be 120 mg · cm⁻³ to 150 mg · cm⁻³ per unit volume of the capacitor element.

The solid electrolytic capacitor may include a capacitor element having the anode foil, the cathode body, and the conductive polymer layer, and the conductive polymer may be included in a ratio of 11 mg · cm⁻³ per unit volume of the capacitor element.

The solid electrolytic capacitor may include a capacitor element having the anode foil, the cathode body, and the conductive polymer layer, and the conductive polymer may be included in a ratio of 6.2 mg · cm⁻³ to 9.0 mg · cm⁻³ per unit volume of the capacitor element.

To address the above-described problem, a manufacturing method of the solid electrolytic capacitor of the present disclosure includes:
an anode foil formation process of forming anode foil; and
a conductive polymer layer formation process of forming a conductive polymer layer between the anode foil and a cathode body,
in which:
   the anode foil formation process includes an enlargement process of forming tunnel-shaped etching pits on a surface layer of the anode foil, and a chemical treatment process of forming a pseudo boehmite layer on the dielectric oxide film layer,
   in the chemical treatment process, an amount of the pseudo boehmite layer is adjusted to 0.4 mg · cm⁻² to 1.8 mg · cm⁻², and
   in the conductive polymer layer formation process, conductive polymer solution including the conductive polymer is attached to at least the anode foil.

The capacitor element is formed from the anode foil, the cathode body, and the conductive polymer layer, and in the conductive polymer formation process, the conductive polymer layer may be formed so that a weight of the conductive polymer is 30 mg · cm⁻³ to 250 mg · cm⁻³ per unit volume of the capacitor element.

The capacitor element is formed from the anode foil, the cathode body, and the conductive polymer layer, and in the conductive polymer formation process, the conductive polymer layer may be formed to so that the conductive polymer is included in a ratio of 11 mg · cm⁻³ per unit volume of the capacitor element.

### EFFECT OF INVENTION

According to the present disclosure, the solid electrolytic capacitor with high withstand voltage and large capacitance can be achieved.

### BRIEF DESCRIPTION OF DRAWINGS

Fig. 1 is a distribution diagram indicating the relationship between the amount of the pseudo boehmite layer and the withstand voltage.
Fig. 2 is a distribution diagram indicating the relationship between the amount of the pseudo boehmite layer and the capacity appearance rate.

### EMBODIMENTS

### (Solid Electrolytic Capacitor)

A solid electrolytic capacitor is a passive element that gains the capacitance and stores and discharges electric charge by the dielectric polarization of dielectric oxide film. This solid electrolytic capacitor has a wound-type or laminated-type shape. The electrolytic capacitor includes anode foil in which dielectric oxide film is formed on a surface, a cathode body, a conductive polymer layer, and a separator.

The anode foil and the cathode body are arranged to face each other via the separator. For example, the anode foil and the cathode body are arranged in a laminated-type in which they are laminated alternately via the separator, or arranged in a wound-type in which they are wound via the separator. The conductive polymer layer includes conductive polymers, is formed between the anode foil and the cathode body, and covers at least a part of dielectric oxide film on a surface of the anode foil. The conductive polymer layer is a true cathode of the solid electrolytic capacitor.

In the solid electrolytic capacitor, electrolytic solution may be used together as an electrolyte other than the conductive polymer layer, and the electrolytic solution is filled in voids of a capacitor element formed by the anode foil, the cathode body, the conductive polymer layer, and the separator. The capacitor element is inserted into a cylindrical outer casing with a bottom. A sealing body with an elastomer layer such as ethylene propylene rubber or butyl rubber is mounted on an opened end of the outer casing, and the capacitor element is sealed by crimping the opened end. Anode lead wire and cathode lead wire are connected to the anode foil and the cathode foil, and the anode lead wire and the cathode lead wire are drawn out from the sealing body.

The separator intervenes between a pair of electrodes, and hold the anode foil and the cathode body apart from each other to prevent short-circuit and to hold the electrolyte layer. If the electrolyte layer can keep its shape on its own and can hold the pair of electrodes apart from each other, the separator can be omitted frmo the capacitor element.

### (Anode foil)

The anode foil is a long foil body formed of elongated aluminum. The purity of the anode foil is desirably 99.9% or more, and impurities such as silicon, iron, copper, magnesium, and zinc may be included. The anode foil has many tunnel-shaped etching pits on the surface layer, such that the specific surface is enlarged. The tunnel-shaped etching pits are dug from both surface of the foil in the thickness direction, and is suitable for the solid electrolytic capacitor for middle or high voltage application. The tunnel-shaped etching pits may be formed in a length that penetrates through the anode foil or a length that does not reach the center of anode the foil in the thickness direction.

The tunnel-shaped etching pits are formed by a surface enlargement process in an anode foil formation process to form the anode foil. In the surface enlargement process, a DC etching process is performed on the anode foil. Typically, in the DC etching process, DC current is applied to the capacitor element immersed in aqueous acidic solution in which halogen ions are present, such as hydrochloric acid, to form the pits, and DC current is applied to the capacitor element immersed in aqueous acidic solution such as nitric acid to enlarge the pits,

The dielectric oxide film is formed on the surface layer of the anode foil enlarged by the tunnel-shaped etching pits. The dielectric oxide film is an aluminum oxide layer including γ-alumina that is a crystalline oxide. A pseudo boehmite layer is present at the foil-surface side than the dielectric oxide film. That is, the pseudo boehmite layer is located at the outermost layer of the foil, and the dielectric oxide film is located at the inner layer of the foil than the pseudo boehmite layer. The pseudo boehmite layer includes hydrated oxides of aluminum and is AlOOH · xH₂O. This pseudo boehmite layer has a dense interior, which deteriorates the impregnation performance of the conductive polymer of the solid electrolytic capacitor to the anode foil, but acts as a resistant layer and improves the withstand voltage of the solid electrolytic capacitor.

The dielectric oxide film and the pseudo boehmite layer is formed by a chemical treatment process after the surface enlargement process of the anode foil. The chemical treatment process is divided into a chemical pretreatment process and a chemical main treatment process. In the chemical pretreatment process, the pseudo boehmite layer is formed on the surface layer of the anode foil. In the chemical main treatment process, the pseudo boehmite layer is transformed into a dielectric oxide film layer from an interface between an unoxidized aluminum foil toward an outer surface of the pseudo boehmite layer.

In the chemical pretreatment process, the anode foil is immersed in pure water of 80 °C or higher or in boiling pure water. The immersion time is determined by balance between withstand voltage and capacitance in accordance with the desired thickness of the pseudo boehmite layer. In the chemical main treatment process, voltage is applied to the anode foil in chemical treatment solution without halogen ions. The chemical treatment solution may be phosphoric acid-based chemical treatment solution such as ammonium diphosphate, boric acid-based chemical treatment solution such as ammonium borate, and adipic acid-based chemical treatment solution such as ammonium adipate, etc. The applied voltage depends on the desired withstand voltage.

Here, an amount of the pseudo boehmite layer is adjusted to be 0.4 mg · cm⁻² to 1.8 mg · cm⁻². When the amount of the pseudo boehmite layer is in this range, the solid electrolytic capacitor with both high withstand voltage and large capacitance can be achieved. If the amount of the pseudo boehmite layer is below this range and is 0.2 mg · cm⁻² or less, the withstand voltage of the solid electrolytic capacitor keenly decrease when compared to the amount in said range. If the amount of the pseudo boehmite layer is over this range and is 1.97 mg · cm⁻² or more, the capacity appearance rate of the solid electrolytic capacitor keenly decrease when compared to the amount in said range.

Preferably, the amount of the pseudo boehmite layer is adjusted to 0.4 mg · cm⁻² to 1.16 mg·cm⁻². When the amount of the pseudo boehmite layer is in this range, the solid electrolytic capacitor with both high withstand voltage and large capacitance can be achieved in high level.

The capacity appearance rate is a ratio of the capacitance of the solid electrolytic capacitor relative to foil capacity of the anode foil and is a percentage of a result obtained by dividing the capacitance by the foil capacity. The foil capacity is measured by cutting out a test piece from the anode foil in which the pseudo boehmite layer is not formed and only the dielectric oxide film is formed, immersing the test piece in capacitance measurement solution in a glass measurement tank with a platinum plate as a counter electrode, and using the capacitance meter. For example, the capacitance measurement solution is aqueous solution of ammonium pentaborate of 80 g · L⁻¹ and 30 °C, the capacitance meter is a potentiostat and a frequency response analyzer, an electrochemical impedance analyze or LCR meter, and the like, DC bias voltage is 1.5 V, and AC current is 0.5 Vrms

A method to adjust the amount of the pseudo boehmite layer to be in a range of 0.4 mg · cm⁻² to 1.8 mg · cm⁻² is not limited, and various method may be used. For example, the amount of the pseudo boehmite layer may be changed by changing the immersion time in pure water in the chemical pretreatment process. Furthermore, as a process after the chemical main treatment process in the chemical treatment process, a series of processes to perform acid treatment by immersing the anode foil in phosphoric acid and the like for a short time, to dissolve the pseudo boehmite layer from the surface, and perform restorative chemical treatment process. In the restorative chemical treatment process, the anode foil is immersed in the chemical treatment solution, and voltage is applied. The chemical treatment solution may be phosphoric acid-based chemical treatment solution such as ammonium diphosphate, boric acid-based chemical treatment solution such as ammonium borate, adipic acid-based chemical treatment solution such as ammonium adipate, and chemical treatment solution in which boric acid and dicarboxylic acid such as citric acid are mixed, etc. The applied voltage depends on the desired withstand voltage.

### (Cathode Body)

For example, the cathode body is a long foil body formed of elongated valve action metal. Otherwise, the cathode body may be a laminate of a metal layer such as silver and a carbon layer. The valve action metal is aluminum, tantalum, niobium, niobium oxide, titanium, hafnium, zirconium, zinc, tungsten, bismuth, and antimony, etc. The purity of the cathode foil is desirably 99% or more, and impurities such as silicon, iron, copper, magnesium, and zinc may be included.

The cathode foil may be plane foil to which the surface enlargement is not performed, may be foil to which tunnel-shaped etching pits or spongy etching pits are formed by the surface enlargement as necessary, or may be foil to which the surface enlargement is performed by vapor-deposition or sintering particles of the valve action metal. The spongy etching pit is formed by immersing the cathode foil in aqueous acidic solution in which halogen ions are present, such as hydrochloric acid, and applying AC current.

Furthermore, the oxide film may be naturally or intentionally formed on the surface layer of the cathode foil by the chemical treatment. The natural oxide film that is naturally formed on the surface layer of the cathode foil is formed when oxygen in the air reacts with the cathode foil.

### (Conductive Polymer)

The conductive polymer included in the conductive polymer layer is a self-doped conjugated polymer doped by dopant molecules in the molecules or a doped conjugated polymer doped by external dopant molecules, and the conjugated polymer is obtained by chemical oxidative polymerization or electrolytic oxidative polymerization of monomers with a n-conjugated double bond or derivatives thereof. The conductive polymer exhibits high conductivity by the doping to the conjugated polymer. That is, the conductivity is exhibited by adding a small amount of an acceptor that easily accepts electrons or a dopant that is a donor that easily donates electrons to the conjugated polymer.

Known polymers may be used for the conjugated polymer without limitation. For example, the conjugated polymer may be polypyrrole, polythiophene, polyfuran, polyaniline, polyacetylene, polyphenylene, polyphenylenevinylene, polyacene, and polythiophenevinylene, etc. These conjugated polymers may be used in single or or in combination of two or more, and may further be a copolymer of two or more kinds of monomers.

Among the above-described conjugated polymers, conjugated polymers formed by polymerizing thiophene or derivatives thereof is preferable, and conjugated polymers in which 3,4-ethylenedioxythiophene (that is, 2,3-dihydrothieno[3,4-b][1,4]dioxin), 3-alkylthiophene, 3-alkoxythiophene, 3-alkyl-4-alkoxythiophene, 3,4-alkylthiophene, 3,4-alkoxythiophene, or derivatives thereof are polymerized are preferable. The thiophene derivatives may preferably be a compound selected from thiophene with substituents at the 3-position and 4-position, and the 3-position and 4-position substituents of the thiophene ring may form a ring together with the 3-position and 4-position carbon. It is preferable that the carbon number of an alkyl group and an alkoxy group is 1 to 16.

In particular, the preferable conjugated polymer is a polymer of 3,4-ethylenedioxythiophene which is called EDOT, that is, poly(3,4-ethylenedioxythiophene) which is called PEDOT. Furthermore, an alkylated ethylenedioxythiophene in which an alkyl group is added to 3,4-ethylenedioxythiophene may be used, and for example, a methylated ethylenedioxythiophene (that is, 2-methyl-2,3-dihydro-thieno[3,4-b][1,4] dioxin), ethylated ethylenedioxythiophene (that is, 2-ethyl-2,3-dihydro-thieno[3,4-b][1,4] dioxine), and the like may be used.

As the dopant, known dopants may be used without limitation. The dopant may be used in single or in combination of two or more. Furthermore, the dopant may also be polymers or monomers. For example, the dopant may be inorganic acid such as polyanion, inorganic acid such as boric acid, nitric acid, and phosphoric acid, and organic acid such as acetic acid, oxalic acid, citric acid, tartaric acid, squaric acid, logisonic acid, croconic acid, salicylic acid, p-toluenesulfonic acid, 1,2-dihydroxy-3,5-benzenedisulfonic acid, methanesulfonic acid, trifluoromethanesulfonic acid, borodisalicylic acid, bisoxalate borate acid, sulfonylimide acid, dodecylbenzenesulfonic acid, propylnaphthalenesulfonic acid, and butylnaphthalenesulfonic acid.

For example, the polyanion may be polymers consisting of only component units with anion groups or polymers consisting of component units with anion groups and component units without anion groups, and may be substituted or unsubstituted polyalkylene, substituted or unsubstituted polyalkenylene, substituted or unsubstituted polyimide, substituted or unsubstituted polyamide, substituted or unsubstituted polyester. In particular, the polyanion may be polyvinyl sulfonic acid, polystyrene sulfonic acid, polyaryl sulfonic acid, polyacrylic sulfonic acid, polymethacrylic sulfonic acid, poly(2-acrylamide-2-methylpropane sulfonic acid), polyisoprene sulfonic acid, polyacrylic acid, polymethacrylic acid, polymaleic acid, etc.

The conductive polymer layer may include various additives such as polyhydric alcohol, in addition to the conductive polymer. The polyhydric alcohol may be sorbitol, ethylene glycol, diethylene glycol, triethylene glycol, polyoxyethylene glycol, glycerin, polyoxyethylene glycerin, xylitol, erythritol, mannitol, dipentaerythritol, pentaerythritol, or combination of two or more. Since the boiling point of the polyhydric alcohol is high, the polyhydric alcohol remains in the solid electrolyte layer even after the drying process, so that ESR reduction and withstand voltage improvement can be achieved.

Such a conductive polymer layer may be formed by using the conductive polymer solution in the conductive polymer formation process. The conductive polymer solution is liquid in which particles or powder of the conductive polymer is dispersed or dissolved. Otherwise, the conductive polymer solution is liquid in which additives included in the conductive polymer layer is dispersed or dissolved, in addition to the conductive polymer. By immersing each of the anode foil, the cathode body, and the separator in the conductive polymer solution and drying them, the conductive polymer and the additive attach to thereto, forming the conductive polymer layer. Furthermore, the anode foil and the cathode body are wound or laminated via the separator to produce the capacitor element, and then the capacitor element is immersed in the conductive polymer solution and is dried. The conductive polymer solution may be applied by droplet or by spraying other than the immersion. The drying process may be repeated for multiple times and may be perform under depressurized environment.

To form the conductive polymer layer using the conductive polymer solution, it is particularly useful to adjust the amount of the pseudo boehmite layer to be in a range of 0.4 mg · cm⁻² to 1.8 mg · cm⁻², from a viewpoint that it is difficult for the conductive polymer to permeate the dense pseudo boehmite layer and adhere to the dielectric oxide film.

The solvent of the conductive polymer solution may be any solvent if particles or powder of the conductive polymer disperses or dissolves thereto, and for example, water, organic solvents, or mixtures thereof is used. A part or all of the solvent of the conductive polymer remains in the conductive polymer layer depending on the types, drying method, drying temperature, or drying time. That is, a part or all of the unvolatilized solvent from the conductive polymer solution remains, and the conductive polymer and the additive attach to the capacitor element, forming the conductive polymer layer. In other word, the conductive polymer layer is formed including the conductive polymer, the solvent of the conductive polymer solution, and the additive added to the conductive polymer solution.

The organic solvent of the conductive polymer solution may be polar solvents, alcohol, esters, hydrocarbon, carbonate compounds, ether compounds, linear ether, heterocyclic compounds, and nitrile compounds, etc.

The polar solvent may be N-methyl-2-pyrrolidone, N,N-dimethylformamide, N,N-dimethylacetoamide, and dimethylsulfoxide. The alcohol may be methanol, ethanol, propanol, and butanol, etc. The ester may be ethyl acetate, propyl acetate, and butyl acetate, etc. The hydrocarbon may be hexane, heptane, benzene, toluene, and xylene, etc. The carbonate compound may be ethylene carbonate and propylene carbonate, etc. The ether compound may be dioxane, diethylether, etc. The linear ether may be ethylene glycol alkyl ether, propylene glycol alkyl ether, polyethylene glycol dialkyl ether, and polypropylene glycol alkyl ether, etc. The heterocyclic compound may be 3-methyl-2-oxazolidinone, etc. The nitrile compound may be acetonitrile, glutaronitrile, methoxyacetonitrile, propionitrile, and benzonitrile, etc.

The additive for the conductive polymer solution may be polyhydric alcohol, organic binders, surfactant, dispersant, defoamer, coupling agent, antioxidant, UV absorber, etc.

The solvent and additive forming the conductive polymer solution is preferably compounds with hydrophilic groups such as hydroxy groups or hydrophilic molecules. For example, the compound with hydroxy groups is polyhydric alcohol such as ethylene glycol and glycerin, etc. The compound with hydroxy groups causes the change in the high-order structure of the conductive polymer, so that the ESR reduction effect and the withstand voltage improvement effect for the solid electrolytic capacitor can be achieved. Furthermore, the polyhydric alcohol has high boiling point and easily remains in the conductive polymer layer.

It is preferable that the conductive polymer layer formed by the conductive polymer solution has a weight of 30 mg · cm⁻³ to 250 mg · cm⁻³ per unit volume of capacitor element. In other word, the capacitor element is impregnated with the conductive polymer solution and is dried so that the total weight of the conductive polymer, remaining solvent of the conductive polymer solution, and the additive remain in the capacitor element in a ratio of 30 mg · cm⁻³ to 250 mg · cm⁻³ per unit volume of capacitor element. When said weight is 30 mg · cm⁻³ to 250 mg · cm⁻³ per unit volume of capacitor element, both low ESR and high withstand voltage can be achieved.

When the weight of the conductive polymer layer is 30 mg · cm⁻³ to 250 mg · cm⁻³ per unit volume of capacitor element, the conductive polymer solution suitably permeates through the anode foil even if there is dense pseudo boehmite layer. Therefore, low ESR can be achieved in addition to high withstand voltage due to the pseudo boehmite layer. Thus, the solid electrolytic capacitor has both high withstand voltage and low ESR.

The weight of the conductive polymer layer is more preferably 60 mg · cm⁻³ to 180 mg · cm⁻³ per unit volume of capacitor element, is more preferably 60 mg · cm⁻³ to 150 mg · cm⁻³ per unit volume of capacitor element, and is more preferably 100 mg · cm⁻³ to 150 mg · cm⁻³ per unit volume of capacitor element.

It is preferable that the weight of the conductive polymer layer is adjusted to be weight of 120 mg · cm⁻³ to 150 mg · cm⁻³ per unit volume of capacitor element. When the conductive polymer layer is adjusted within this range, the adhesion area of the dielectric oxide film and the conductive polymer layer through the pseudo boehmite layer becomes large, while the pseudo boehmite layer and the conductive polymer layer does not interfere with each other. Therefore, the ESR becomes extremely low, and the withstand voltage becomes extremely high. However, when the weight is below or above this range, the ESR increases and the withstand voltage decreases in comparison with the said range although it is low ESR and high withstand voltage as the absolute value.

Note that the adjusted weight of the solid electrolyte layer is not limited. For example, the weight of the solid electrolyte layer is adjusted by changing the type and volatilization amount of components volatilized from the solid electrolyte layer using the drying temperature, the drying time, and the pressure after the solid electrolyte layer is immersed in the conductive polymer solution as variables.

Furthermore, it is preferable that the weight of the conductive polymer layer is adjusted to be weight of 11 mg · cm⁻³ or less per unit volume of capacitor element. When said weight is 11 mg⁻³ or less per unit volume of capacitor element, both low ESR and high withstand voltage can be achieved.

When the weight of the conductive polymer layer is 11 mg · cm⁻³ or less per unit volume of capacitor element, the conductive polymer solution permeates well through the dense pseudo boehmite layer, and the conductive polymer easily adheres to the dielectric oxide film. Therefore, low ESR can be achieved in addition to high withstand voltage due to the pseudo boehmite layer. Thus, the solid electrolytic capacitor has both high withstand voltage and low ESR.

The weight of the conductive polymer is more preferably 1.2 mg · cm⁻³ or more per unit volume of capacitor element, is more preferably 2 mg · cm⁻³ to 9 mg · cm⁻³ per unit volume of capacitor element, and is more preferably 3.7 mg · cm⁻³ to 9 mg · cm⁻³ per unit volume of capacitor element.

It is preferable that the weight of the conductive polymer is adjusted to be 6.2 mg · cm⁻³ to 9 mg · cm⁻³ per unit volume of capacitor element. When the weight of the conductive polymer is adjusted within this range, the adhesion area of the dielectric oxide film and the conductive polymer layer through the pseudo boehmite layer becomes large, while the pseudo boehmite layer and the conductive polymer layer does not interfere with each other. Therefore, the ESR becomes extremely low, and the withstand voltage becomes significantly high and maximizes. When the weight is below or above this range, the ESR increases and the withstand voltage decreases in comparison with the said range although it is low ESR and high withstand voltage as the absolute value.

The weight of the conductive polymer in the conductive polymer layer may be adjusted by adjusting the amount of the conductive polymer dispersed or dissolved in the conductive polymer solution, or adjusting the amount of dispersion medium or the solvent. The actual weight of the conductive polymer included in the conductive polymer layer is calculated from a difference between the weight of the capacitor element measured before and after the conductive polymer layer is formed. Then, the weight of the conductive polymer included in the conductive polymer layer is calculated from said difference and the concentration og the conductive polymer included in the conductive polymer layer. Furthermore, the solid electrolytic capacitor may be disassembled, and only the conductive polymer may be extracted.

### (Separator)

The separator includes cellulose such as kraft, Manila hemp, esparto, hemp, rayon, and mixed papers thereof, polyester resin such as polyethylene terephthalate, polybutylene terephthalate, polyethylene naphthalate, and derivatives thereof, polytetrafluoroethylene resin, polyvinylidene fluoride resin, vinylon resin, polyamide resin such as aliphatic polyamide, semi-aromatic polyamide, and total aromatic polyamide, polyimide resin, polyethylene resin, polypropylene resin, trimethylpentene resin, polyphenylene sulfide resin, acrylic resin, polyvinyl alcohol resin and the like, and the resin may be used in single or in combination.

### (Electrolytic Solution)

The solid electrolytic capacitor may only include the conductive polymer layer, or the electrolytic solution may be used together. The electrolytic solution is impregnated in the capacitor element after the attachment process of the conductive polymer and the drying process. The electrolytic solution bears the repairing of at least the dielectric oxide film.

The solvent of the electrolytic solution is not particularly limited, and a protic organic polar solvent or an aprotic organic polar solvent may be used. The protic polar solvent may be monohydric alcohol, polyhydric alcohol, oxyalcohol compounds, and water, and for example, is ethylene glycol or propylene glycol. The aprotic polar solvent may be sulfones, amides, lactones, cyclic amides, nitriles, sulfoxides, and the like, and for example, is sulfolane, γ-butyrolactone, ethylene carbonate, or propylene carbonate.

A solute included in the electrolytic solution includes anion and cation components, and is typically organic acid such as adipic acid and benzoic acid or salt thereof, inorganic acid such as boric acid and phosphoric acid or a salt thereof, or a composite compound of organic acid and inorganic acid such as borodisalicylic acid or ion-dissociative salt thereof, and is used single or in combination of two or more. At least one salt of the organic acid, the inorganic acid, and the composite compound of organic acid and inorganic acid may be ammonium salt, quaternary ammonium salt, quaternary amidinium salt, amine salt, sodium salt, and potassium salt, etc. Acid that is the anion and base that is the cation may be separately added to the electrolytic solution as solute components.

Furthermore, other additives may be added to the electrolytic solution. The additive may be polyethylene glycol, complex compounds of boric acid and polysaccharides (mannit, sorbit, etc.), complex compounds of boric acid and polyhydric alcohol, borate esters, nitro compounds, phosphate esters, and colloidal silica, etc. These may be used in single or in combination of two or more. The nitro compound suppresses an amount of hydrogen gas produced in the electrolytic capacitor. The nitro compound may be o-nitrobenzoic acid, m-nitrobenzoic acid, p-nitrobenzoic acid, o-nitrophenol, m-nitrophenol, and p-nitrophenol, etc.

Hereinafter, the present disclosure will be described in more detail based on examples. Note that the present disclosure is not limited to the following examples.

### (Examples 1 to 4)

Next, the solid electrolytic capacitor of the examples 1 was produced. Aluminum foil was prepared as the anode foil. DC etching was performed on both surface of the aluminum foil to form tunnel-shaped pits. In the DC etching process, DC current was applied to the aluminum foil in aqueous solution including hydrochloric acid to form the pits, and then DC current was applied to the aluminum foil in aqueous solution including nitric acid to enlarge the pits,

The aluminum foil to which the tunnel-shaped pits were had been formed was transferred to the chemical pretreatment process. In the chemical pretreatment process, the aluminum foil was immersed in boiled water to form the pseudo boehmite layer on the surface of the aluminum foil. The amount of the pseudo boehmite layer was adjusted by adjusting the immersion time of the aluminum foil in the boiled water, utilizing the tendency that the amount of the pseudo boehmite layer is proportional to the square root of the immersion time in the boiled water. Next, the chemical main treatment process was performed. In the chemical main treatment process, the aluminum foil was immersed in boric acid aqueous solution of 85°C, and said aluminum foil was conducted with the constant current density of 25 mA · cm⁻² until voltage became a predetermined chemical treatment voltage, and then said voltage was maintained for 10 minutes. By this, the pseudo boehmite layer was transformed into the dielectric oxide film except for the outermost layer. Note that the chemical treatment voltage for the aluminum foil was 650 V.

This anode foil was punched into a desired electrode shape, and the chemical treatment process was performed to the exposed end surface again, and the end surface was covered with silicone resin for insulation.

Meanwhile, conductive polymer solution in which poly(3,4-ethylenedioxythiophene (PEDOT:PSS) doped with polystyrene sulfonic acid (PSS) had been dispersed as the conductive polymer was produced. This conductive polymer was dispersed in the conductive polymer solution in a ratio of 2 wt%. The solvent of the conductive polymer solution was water, and the pH of the conductive polymer solution was adjusted to pH4 by ammonia water with the concentration of 28%. The dispersion process of the conductive polymer was performed on the conductive polymer solution using ultrasonic for 10 minutes. 88 wt% of sorbitol relative to the addition amount of the conductive polymer was further added to the conductive polymer solution, and the dispersion process using ultrasonic was performed for 10 minutes again.

80 pl of the conductive polymer solution was dropped to the anode foil with the projected area of 1 cm². Then, the anode foil was placed still under the environment of 60 °C for 10 minutes, and was further placed still under the environment of 110 °C for 30 minutes, to dry the anode foil. By this, the solid electrolyte of the conductive polymer was formed on the anode foil.

After the solid electrolyte was formed, carbon paste was applied on the solid electrolyte and was cured by placing the anode foil still under the environment of 110 °C for 30 minutes. Furthermore, copper foil was adhered as the drawn-out terminal, at the same time as the application of silver paste on the carbon layer. The silver paste was cured by placing the anode foil still under the environment of 110 °C for 30 minutes in a state the copper foil had been adhered to the silver paste portion before curing. The above carbon layer, silver layer, and copper foil layer corresponded to the cathode foil of the solid electrolytic capacitor.

The solid electrolytic capacitor of the examples 1 was produced as described above. Furthermore, the solid electrolytic capacitors of the examples 2 to 4 and the solid electrolytic capacitor of the comparative examples 1 and 2 were produced. The solid electrolytic capacitors of the examples 2 to 4 and the comparative examples 1 and 2 were produced by the same structure, the same composition, the same manufacturing method and the same manufacturing condition as that of the example 1, except that the amount of the pseudo boehmite layer is different.

The amount of the pseudo boehmite layer in the examples 1 to 4 and the comparative examples 1 and 2 were as the below table 1.

**[Table 1]**

| | Comparative Example 1 | Example 1 | Example 2 | Example 3 | Example 4 | Comparative Example 2 |
|---|---|---|---|---|---|---|
| Amount of Pseudo Beohmite Layer/mp • cm⁻² | 0.10 | 0.40 | 1.16 | 1.46 | 1.73 | 1.97 |

The amount of the pseudo boehmite layer of the examples 1 to 4 and the comparative examples 1 and 2 was adjusted as the above table 1 by adjusting the immersion time of the aluminum foil in the boiled water, utilizing the tendency that the amount of the pseudo boehmite layer is proportional to the square root of the immersion time in the boiled water. Note that the amount of the pseudo boehmite layer was measured as follows. A method of gradually removing the pseudo boehmite layer was used as the measurement method. Firstly, the initial weight of the anode foil in which the pseudo boehmite layer was not removed at all after the chemical main treatment process was measured. The dissolving process of immersing the anode foil in the phosphoric acid aqueous solution for a short time to dissolve the surface layr of the pseudo boehmite layer was performed. To repair defects produced in the dielectric oxide film in the dissolving process, restorative chemical treatment process was performed. In the restorative treatment process, the aluminum foil was immersed in 22g/L of boric acid aqueous solution of 85 °C, and said aluminum foil was conducted with the constant current density of 1 mA · cm⁻² until voltage for 10 minutes. The dissolving process and the restorative chemical treatment process were repeated for multiple times, and when it was confirmed that the pseudo boehmite layer had been removed enough using an electronic microscope, the removed weight of the anode foil was measured. The amount of the pseudo boehmite layer after the chemical main treatment was calculated from the difference between the initial weight and the removed weight of the anode foil.

The withstand voltage of the solid electrolytic capacitors of the examples 1 to 4 and the comparative example 1 and 2 was measured. The measurement method for the withstand voltage was as follows. Namely, voltage was applied to the solid electrolytic capacitor in the room temperature of 25 °C. Initial voltage was 100 V, and the voltage was increased by 1 V every 10 seconds. Then, the voltage when current of 1 mA flowed in the solid electrolytic capacitor was determined as the withstand voltage. Note that Sourcemeter 2410 from Tektronix was used to measure the withstand voltage.

Furthermore, the capacity appearance rate of the solid electrolytic capacitors of the examples 1 to 4 and the comparative example 1 and 2 was measured. Firstly, the foil capacity of the anode foil on which only the dielectric oxide film was formed and the pseudo boehmite layer was not formed was measured. After the tunnel-shaped pits were formed on the aluminum foil by the same method and condition as the example 1, the anode foil was immersed in 40 g/L⁻¹ of boric acid aqueous solution of 85 °C, and said anode foil was conducted with the constant current density of 0.4 mA · cm⁻² until voltage to form the dielectric oxide film. After the voltage reached 585V, the conduction was maintained for 3 minutes and was stopped. The test piece of 1 cm2 was cut out from the anode foil, and was immersed in 80 g · L-1 of ammonium pentaborate aqueous solution of 30 °C in the glass measurement tank with a platinum plate with the capacity of 40000 µD or more as a counter electrode. Then, the foil capacity was measured in which DC bias voltage was 1.5 V, AC voltage was 120 Hz, and measurement frequency was 0.5 Vrms.

The capacitance of the solid electrolytic capacitor of the examples 1 to 4 and the comparative example 1 and 2 was measured using LCR meter ZM2376 from NF Corporation with the measurement frequency of 100 kHz. Then, the capacity appearance rete was calculated by dividing the capacitance of the solid electrolytic capacitor by the foil capacity of the anode foil with only the dielectric oxide film and without the pseudo boehmite layer, and converting the result into percentage.

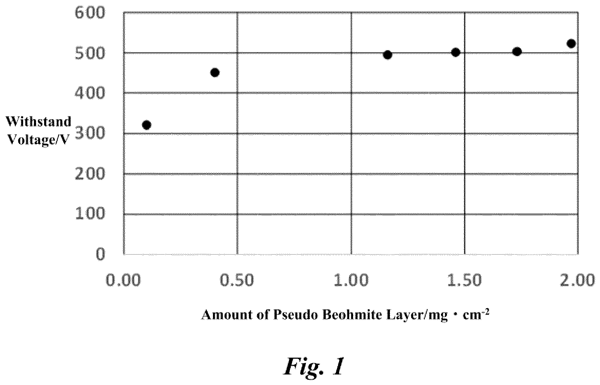

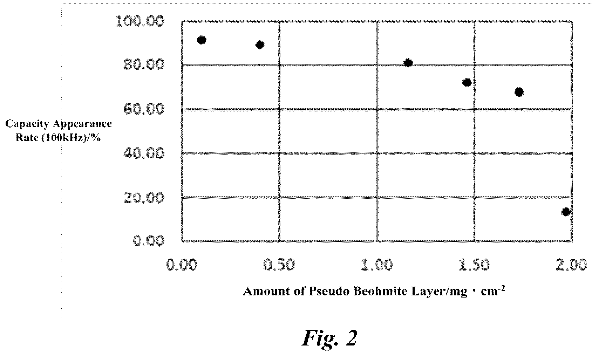

The withstand voltage and the capacity appearance rate of the solid electrolytic capacitors of the examples 1 to 4 and the comparative examples 1 and 2 are shown in the below table 2. Furthermore, a distribution diagram of Fig. 1 indicating the relationship between the amount of the pseudo boehmite layer and the withstand voltage based on the below table 2 is shown. Moreover, a distribution diagram of Fig. 2 indicating the relationship between the amount of the pseudo boehmite layer and the capacity appearance rate based on the below table 2 is shown.

**[Table 2]**

| | Comparative Example 1 | Example 1 | Example 2 | Example 3 | Example 4 | Comparative Example 2 |
|---|---|---|---|---|---|---|
| Amount of Pseudo Beohmite Layer/mg·cm⁻² | 0.10 | 0.40 | 1.16 | 1.46 | 1.73 | 1.97 |
| Withstand Voltage/V | 321 | 451 | 495 | 501 | 503 | 523 |
| Capacity Appearance Rate/% | 91.50 | 89.24 | 81.02 | 72.20 | 67.79 | 13.50 |

As shown in the table 2 and Fig. 1, the solid electrolytic capacitors of the examples 1 to 4 and the comparative example 2 had high withstand voltage. In contrast, the withstand voltage of the solid electrolytic capacitor of the comparative example 1 was significantly smaller than the withstand voltage of the solid electrolytic capacitors of the examples 1 to 4 and the comparative example 2. Accordingly, it was confirmed that, in the solid electrolytic capacitor with the conductive polymer layer, the withstand voltage became high when the amount of the pseudo boehmite layer was 0.40 mg · cm⁻² or more.

Furthermore, as shown in the table 2 and Fig. 2, the solid electrolytic capacitors of the examples 1 to 4 and the comparative example 1 had high capacity appearance rate. In contrast, the capacity appearance rate of the solid electrolytic capacitor of the comparative example 2 was significantly smaller than the capacity appearance rate of the solid electrolytic capacitors of the examples 1 to 4 and the comparative example 1. Accordingly, it was confirmed that, in the solid electrolytic capacitor with the conductive polymer layer, the capacity appearance rate became high when the amount of the pseudo boehmite layer was 1.8 mg. cm⁻² or less.

In summary, the solid electrolytic capacitor of the comparative example 2 had high withstand voltage, but significantly small capacity appearance rate. The solid electrolytic capacitor of the comparative example 1 had high-capacity appearance rate, but significantly small withstand voltage. In contrast, as the examples 1 to 4, when the solid electrolytic capacitor had the conductive polymer layer and the amount of the pseudo beohmite layer was 0.4 mg · cm⁻² to 1.8 mg · cm⁻², both high withstand voltage and high capacity appearance rate was achieved.

### (Examples 5 to 11)

Next, the solid electrolytic capacitors of the examples 5 to 11 were produced. These solid electrolytic capacitors were a wound-type, and the anode foil and the cathode foil were long band-shape aluminum foil. DC etching was performed on both surface of the anode foil to form the tunnel-shaped pits. The puts were formed on both surface of the cathode foil by DC etching, and the oxide film was formed by the chemical treatment using voltage of 3 Vfs.

The anode foil to which the tunnel-shaped pits had been formed was transferred to the chemical pretreatment process. In the chemical pretreatment process, the aluminum foil was immersed in boiled water to form the pseudo boehmite layer on the surface of the aluminum foil. The amount of the pseudo boehmite layer in the examples 5 to 11 was the same, which was 1.40 mg·cm⁻² similar to the example 3. After the chemical pretreatment process, the chemical main treatment process for the anode foil was performed. In the chemical main treatment process, the anode foil was immersed in boric acid aqueous solution of 85 °C, and said anode foil was conducted with the constant current density of 25 mA · cm⁻² until voltage became a predetermined chemical treatment voltage, and then said voltage was maintained for 10 minutes. By this, the pseudo boehmite layer was transformed into the dielectric oxide film except for the outermost layer. Note that, in the chemical treatment, the applied voltage reached 650 V.

The anode foil and cathode foil were connected to lad wire and were wound to face each other via a manila-based separator. Then, the restorative chemical treatment was performed by ammonium borate aqueous solution. Next, the capacitor element was immersed in the conductive polymer solution, and after the capacitor element was impregnated with the conductive polymer solution, the capacitor element was dried.

Polyethylene dioxythiophene doped with polystyrene sulfonic acid (PEDOT:PSS) was dispersed in the conductive polymer solution as the conductive polymer. The solvent of the conductive polymer solution was a mixture solution of water and ethylene glycol. Sorbitol was added to the conductive polymer solution. The composition of the conductive polymer solution was 48.5 wt% of water, 48.5 wt% of ethylene glycol, 1 wt% PEDOT:PSS, and 2 wt% sorbitol.

The weight of the conductive polymer layer formed in the capacitor element of the solid electrolytic capacitor of each example was different. The weight of the conductive polymer layer was the total weight of the conductive polymer, remaining solvent, and additive in the conductive polymer layer. Hereinafter, the weight of the conductive polymer per unit volume of the capacitor element is referred to as the conductive polymer layer weight.

The drying time after the conductive polymer solution was immersed was different for each of the examples 5 to 11. The conductive polymer layer weight of the examples 5 to 11 was adjusted according to the difference in the drying time. As described above, the solid electrolytic capacitors of the examples 5 to 11 were produced by the same configuration, same composition, same production method, and same production condition, except for the formation method of the conductive polymer layer and the conductive polymer layer weight.

### (Withstand Voltage and ESR)

The withstand voltage of the solid electrolytic capacitors of the examples 5 to 11 was measured. The withstand voltage was measured by the same method and under the same conditions as those of the examples 1 to 4 and the comparative examples 1 and 2. Furthermore, The ESR of the solid electrolytic capacitors of the examples 5 to 11 was measured. The ESR was measured using LCR meter from NF Corporation under the room temperature. The measurement frequency was 100 kHz, and the AC amplitude was sine wave of 0.5 Vms.

The measurement result of the withstand voltage and ESR are shown in the below table 3 together with the conductive polymer layer weight of the examples 5 to 11. In the table 3, the conductive polymer layer weight is expressed as the conductive polymer layer weight per unit volume of the capacitor element.

**[Table 3]**

| | Example 5 | Example 6 | Example 7 | Example 8 | Example 9 | Example 10 | Example 11 |
|---|---|---|---|---|---|---|---|
| Conductive Polymer Layer Weight per Unit Volume of Capacitor Element [mg·cm⁻³] | 30 | 60 | 120 | 150 | 180 | 250 | 301 |
| Withstand Voltage [V] | 363 | 464 | 570 | 570 | 358 | 356 | 353 |
| ESR [Ω/100kHz] | 0.659 | 0.289 | 0.109 | 0.109 | 0.110 | 0.313 | 8.635 |

As shown in the table 3, the conductive polymer layer weight was the weight (mg · cm⁻³) per unit volume of the capacitor element, and was varied from 30 mg · cm⁻³ to 301 mg · cm⁻³ so that the examples 5 to 11 take unique values.

As shown in the table 3, the withstand voltage of the examples 5 to 11 exceeded 350 V. In particular, when the conductive polymer layer weight was 25 mg · cm⁻³ to 250 mg · cm⁻³, the ESR of the solid electrolytic capacitor becomes small.

Furthermore, when the weight of the conductive polymer layer was 60 mg · cm⁻³ to 180 mg · cm⁻³ per unit volume of the capacitor element, higher withstand voltage and lower ESR were achieved, when the weight was 60 mg · cm⁻³ to 150 mg · cm⁻³ per unit volume of the capacitor element, particularly high withstand voltage and low ESR were achieved, and when the weight was 100 mg · cm⁻³ to 150 mg · cm⁻³ per unit volume of the capacitor element, highest withstand voltage and lowest ESR were achieved.

When the conductive polymer layer weight was 120 mg · cm⁻³ to 150 mg · cm⁻³, the ESR of the solid electrolytic capacitor could be minimized without interfering high withstand voltage due to the pseudo boehmite layer of 0.4 mg · cm⁻² to 1.8 mg · cm⁻², but rather improving the withstand voltage.

### (Examples 12 to 18)

The solid electrolytic capacitors of the examples 12 to 18 were produced as follows. These solid electrolytic capacitors were a wound-type. The anode foil and the cathode foil were the same as the examples 5 to 11. That is, the anode foil had the tunnel-shaped etching pits, the pseudo boehmite layer of 1.40 mg · cm⁻², and the dielectric oxide film formed by applying voltage of 650 V.

The solid electrolytic capacitors of the examples 12 to 18 were produced by the same configuration, same composition, same production method, and same production condition as the examples 5 to 11, except for the weight of the conductive polymer attached in the capacitor element. In the examples 12 to 18, the weight of the conductive polymer in the conductive polymer solution was adjusted by adding the mixture solution of water and ethylene glycol according to the example, whereas the conductive polymer solution was PEDOT:PSS of 2wt% in the examples 5 to 11. The mixture solution is 90 wt% of water and 10 wt% of ethylene glycol.

### (Withstand Voltage and ESR)

The withstand voltage of the solid electrolytic capacitors of the examples 12 to 18 was measured. The withstand voltage was measured by the same method and under the same conditions as those of the examples 1 to 4 and the comparative examples 1 and 2. Furthermore, The ESR of the solid electrolytic capacitors of the examples 12 to 18 was measured. The ESR was measured by the same method and under the same conditions as those of the examples 5 to 11.

The measurement result of the withstand voltage and ESR are shown in the below table 4 together with the conductive polymer layer weight of the examples 12 to 18. In the table 4, the conductive polymer layer weight is expressed as the conductive polymer layer weight per unit volume of the capacitor element.

**[Table 4]**

| | Example 12 | Example 13 | Example 14 | Example 15 | Example 16 | Example 17 | Example 18 |
|---|---|---|---|---|---|---|---|
| Conductive Polymer Layer Weight per Unit Volume of Capacitor Element [mg·cm⁻³] | 1.2 | 2.0 | 3.7 | 6.2 | 8.6 | 9.0 | 10.3 |
| Withstand Voltage [V] | 568 | 568 | 568 | 558 | 553 | 515 | 403 |
| ESR [Ω/100kHz] | 14.87 | 7.562 | 3.825 | 2.829 | 1.526 | 1.356 | 4.064 |

As shown in the table 4, the weight of the conductive polymer was the weight (mg · cm⁻³) per unit volume of the capacitor element, and was varied from 1.2 mg · cm⁻³ to 10.3 mg · cm⁻³ according to the unique value of the examples 12 to 18. Each weight of the conductive polymer was calculated by subtracting the weight of the capacitor element from the weight of the capacitor element after being immersed in the conductive polymer solution and before being dried, and multiplying the difference by the concentration of PEDOT/PSS.

As shown in the table 4, the withstand voltage was maintained 400 V or more in all range up to 11.0 mg · cm⁻³ of the weight of the conductive polymer, while the ESR decreased. That is, the ESR of the solid electrolytic capacitor decreased without largely interfering high withstand voltage due to the pseudo boehmite layer of 0.4 mg · cm⁻² to 1.8 mg · cm⁻².

Furthermore, the withstand voltage and the ESR were preferable when the weight of the conductive polymer was 12. mg · cm⁻³. When the weight of the conductive polymer was 2.0 mg · cm⁻³ to 9.0 mg · cm⁻³, the ESR became further low. Moreover, when weight of the conductive polymer was 3.7 mg · cm⁻³ to 9.0 mg · cm⁻³, the ESR became particularly low.

When the conductive polymer layer weight was 6.2 mg · cm ³ to 9.0 mg·cm⁻³, the ESR of the solid electrolytic capacitor could be minimized without interfering high withstand voltage due to the pseudo boehmite layer of 0.4 mg · cm⁻² to 1.8 mg · cm⁻², but rather improving the withstand voltage. Both the maximized withstand voltage and the minimized ESR could be achieved.

## Claims

1. A solid electrolytic capacitor comprising:
anode foil;
a cathode body facing the anode foil; and
a conductive polymer layer intervening between the anode foil and the cathode body,
wherein:
the anode foil has tunnel-shaped etching pits formed on a surface layer of the anode foil, a dielectric oxide film layer formed on the surface layer of the anode foil, and a pseudo boehmite layer on the dielectric oxide film layer and formed on the surface layer of the anode foil, and
an amount of the pseudo boehmite layer is 0.4 mg · cm⁻² to 1.8 mg · cm⁻².

2. The solid electrolytic capacitor according to claim 1, wherein the conductive polymer layer is formed by conductive polymer solution including the conductive polymer.

3. The solid electrolytic capacitor according to claim 2, wherein the conductive polymer layer includes the conductive polymer, a solvent of the conductive polymer solution that disperses or dissolves the conductive polymer, and an additive to which the conductive polymer is added.

4. The solid electrolytic capacitor according to any one of claims 1 to 3, further comprising a capacitor element having the anode foil, the cathode body, and the conductive polymer layer,
wherein a weight of the conductive polymer layer is 30 mg · cm⁻³ to 250 mg · cm⁻³ per unit volume of the capacitor element.

5. The solid electrolytic capacitor according to any one of claims 1 to 3, further comprising a capacitor element having the anode foil, the cathode body, and the conductive polymer layer,
wherein a weight of the conductive polymer layer may be 120 mg · cm⁻³ to 150 mg · cm⁻³ per unit volume of the capacitor element.

6. The solid electrolytic capacitor according to any one of claims 1 to 3, further comprising a capacitor element having the anode foil, the cathode body, and the conductive polymer layer,
wherein the conductive polymer is included in a ratio of 11 mg · cm⁻³ per unit volume of the capacitor element.

7. The solid electrolytic capacitor according to any one of claims 1 to 3, further comprising a capacitor element having the anode foil, the cathode body, and the conductive polymer layer,
wherein the conductive polymer is included in a ratio of 6.2 mg · cm⁻³ to 9.0 mg · cm⁻³ per unit volume of the capacitor element.

8. The solid electrolytic capacitor according to any one of claims 1 to 3, further comprising electrolytic solution between the anode foil and the cathode body.

9. A manufacturing method of a solid electrolytic capacitor comprising:
an anode foil formation process of forming anode foil; and
a conductive polymer layer formation process of forming a conductive polymer layer between the anode foil and a cathode body,
wherein:
the anode foil formation process includes an enlargement process of forming tunnel-shaped etching pits on a surface layer of the anode foil, and a chemical treatment process of forming a dielectric oxide film layer on a surface layer of the anode foil and a pseudo boehmite layer on the dielectric oxide film layer,
in the chemical treatment process, an amount of the pseudo boehmite layer is adjusted to 0.4 mg · cm⁻² to 1.8 mg · cm⁻², and
in the conductive polymer layer formation process, conductive polymer solution including the conductive polymer is attached to at least the anode foil.

10. The manufacturing method of the solid electrolytic capacitor according to claim 9, wherein:
the capacitor element is formed from the anode foil, the cathode body, and the conductive polymer layer, and
in the conductive polymer formation process, the conductive polymer layer may be formed so that a weight of the conductive polymer is 30 mg · cm⁻³ to 250 mg · cm⁻³ per unit volume of the capacitor element.

11. The manufacturing method of the solid electrolytic capacitor according to claim 9, wherein:
he capacitor element is formed from the anode foil, the cathode body, and the conductive polymer layer, and
in the conductive polymer formation process, the conductive polymer layer may be formed to so that the conductive polymer is included in a ratio of 11 mg · cm⁻³ per unit volume of the capacitor element.
